# EUROPEAN PATENT SPECIFICATION

(11) **EP 4 573 534 B1**
(45) Date of publication and mention of the grant of the patent: **04.11.2026**
(21) Application number: 23751647.1
(22) Date of filing: 08.08.2023
(51) Int. Cl.: G08B 25/00, G08B 29/18, G08B 21/04

(54) **A METHOD OF AND A DEVICE FOR OPERATING A FALL DETECTION SYSTEM AND A FALL DETECTION SYSTEM**
VERFAHREN UND VORRICHTUNG ZUM BETRIEB EINES FALLDETEKTIONSSYSTEMS UND FALLDETEKTIONSSYSTEM
PROCÉDÉ ET DISPOSITIF POUR FAIRE FONCTIONNER UN SYSTÈME DE DÉTECTION DE CHUTE ET SYSTÈME DE DÉTECTION DE CHUTE

(30) Priority: 19.08.2022 WO PCT/CN2022/113598; 29.09.2022 EP 22198627
(43) Date of publication of application: 25.06.2025
(73) Proprietor: Signify Holding B.V., 5656 AE Eindhoven (NL)
(72) Inventor: WANG, Gang, 5656 AE Eindhoven (NL); PAN, Bo, 5656 AE Eindhoven (NL); YU, Zhao, 5656 AE Eindhoven (NL); WEI, Ying, Dong, 5656 AE Eindhoven (NL); QIU, Jia, Long, 5656 AE Eindhoven (NL); WEI, Gongming, 5656 AE Eindhoven (NL)
(74) Representative: Verweij, Petronella Daniëlle
(86) International application number: PCT/EP2023/071892
(87) International publication number: WO 2024/037930

(56) References cited:
- EP-A2- 3 978 949
- WO-A2-2020/207649
- US-A1- 2011 043 630

## Description

### TECHNICAL FIELD

The present disclosure generally relates to the field of fall detection, more particularly, to a method of and a device for operating a fall detection system and a fall detection system.

### BACKGROUND

One of the healthcare issues faced by most states and regions in this modem society is to take care of more and more senior people, many of whom living alone. A major health risk for vulnerable population including for example the elderly, infirmed, or disabled is injuries caused by incident fall, such as in the bathroom. Fall, which may be defined as an uncontrolled and sudden displacement of the body of a person to the ground or the floor, if left unnoticed, may cause serious health problem or even lead to death.

It is therefore of much interest to the healthcare industry to monitor fall events happening to the vulnerable people groups. Automated fall detection currently plays an important function for most elderly care solutions.

Compared with wearable device based fall detection methods, contactless fall detection by using remote sensors has some unique advantages and therefore are becoming dominant.

US2011043630A1 discloses an image processing sensor system functioning as a standalone unit to capture images and process the resulting signals to detect objects or events of interest. It automatically disables the alarm or notification function when a caregiver or other visitor arrives at the patient's bed side.

EP3978949A2 discloses methods, apparatus and systems for wireless monitoring, movement tracking, human recognition, and sound sensing, obtaining a time series of channel information (TSCI) of the wireless multipath channel based on received wireless signal; computing a spatial-temporal information (STI) based on the TSCI; monitoring the motion of the object based on the TSCI and the STI; performing a task based on the monitoring; and generating a response based on the task.

WO2020207649A2 discloses an elderly care and security system comprising one or more networked lighting luminaires and sensors. When the sensors detect no presence for a period longer than a predetermined time interval, the system automatically activate an alarm system.

Radar sensors, such as Frequency-Modulated Continuous-Wave Radar sensors, have been adopted for years by many elderly care solutions to realize remote fall detection. In recent years, 3 dimensional, 3D, Time of Flight, ToF, sensor based fall detection solutions are emerging.

In a fall detection system employing a 3D ToF sensor, the sensor monitors a space, such as space within a bathroom to capture in real time positions and postures of a person in the space. If the person falls and lies on the floor, his or her posture being perceived by the sensor is different from when the person stands or sits.

Different from other sensors such as accelerometer in wearable devices and radar sensors, 3D ToF sensors do not consider the falling behavior/process itself (i.e., before the person lying on the floor) as important for detecting and confirming a fall.

As the 3D ToF sensor based fall detection does not rely on falling behaviors which may be very different from person to person and from situation to situation to detect fall events, the 3D ToF sensor based fall detection system can largely reduce false negative (missing detection) and false positive/alarm.

On the other hand, 3D ToF sensors, especially low-resolution ones, can hardly distinguish a lying person who fell from a lying person who is repairing the toilet/drainpipe or person-alike bulky objects such as pile of clothes being thrown on the floor, for example before being putting into the washing machine. These will trigger false alarm if not handled properly.

A known method for prevent false alarm being triggered is to configure a special mode, such as a no-fall-detection mode, for the fall detection system. Under this mode, no alarm will be raised, even if fall-alike activities of a user detected.

One shortcoming with the fall detection system operating the no-fall-detection mode is the user forgetting to exit or deactivate the mode. This may cause serious problem as fall events happening to the user may not be detected timely, which poses much risk to the safety of the user.

In consideration of the above, there is a genuine need for a fall alarm detection system and a method of operating the fall detection system which allows the fall detection system to operate appropriately to effectively prevent false alarm without compromising accurate detection any possible fall events.

### SUMMARY

In a first aspect of the present disclosure, there is presented a method of operating a fall detection system, the system comprising at least one fall detection sensor communicatively connected to an alarm device, the at least one fall detection sensor arranged to monitor activities of a user and to trigger the alarm device to raise an alarm when a fall event of the user is detected, wherein the fall detection system is configured to have a particular operating mode of raising no alarm when a specified activity is detected by the at least one fall detection sensor, the specified activity comprising positions and postures that may be confused by the fall detection sensor with positions and postures related to a fall event, the method comprising the steps of:
- actuating the particular operating mode of the fall detection system;
- controlling the fall detection sensor to monitor activities of the user;
- exiting the particular operating mode of the fall detection system when no activity is detected for a defined period of time, a length of the defined period being variable depending on the specified activity monitored by the fall detection sensor; wherein

the step of controlling is performed for a period of time,
the step of exiting comprises exiting the particular operating mode when no activity is detected during the period of time.

The present disclosure is based on the insight that a fall detection system configured with a particular or special operating mode of raising no alarm may run or operate reliably by controlling the fall detection system to exit the particular operating mode, when determined it is no longer necessary to run the particular operating mode.

When the particular operating mode of the fall detection system is actuated or activated, a fall detection sensor of the fall detection system operates as usual to monitor activities of the user, without raising an alarm no matter a suspected fall event is detected or not.

With the method of the present disclosure, the fall detection system is operated to exit the particular operating mode when no activity is detected for a defined period of time. The period of time may vary depending on the specified monitored activity.

The method thereby ensures that the particular operating mode of the fall detection system where no alarm is raised is exited timely, preventing any risk posed by missing detection of the fall events caused by unnecessary and persistent operation of the particular operating mode of the fall detection system.

The fall detection system so operated can therefore effectively prevent false alarms by using the particular operating mode while ensuring that necessary alarm in response to regular fall events can still be raised reliably.

In an example of the present disclosure, the step of actuating is performed in response to receiving an instruction from the user.

As the particular operating mode of the fall detection system is designed for the purpose of preventing false alarm, such a mode is actuated or activated in response to an instruction from the user. The user, for example when planning to do some repairing work in the bathroom which involves lying-down positions, can choose to switch on the particular operating mode. The user can then perform the necessary activities in a relaxed manner, without worrying of triggering the fall alarm.

In an example of the present disclosure, the step of actuating is performed by disabling a trigger message sent by the fall detection sensor to the alarm device.

In the particular operating mode of the fall detection system, the fall detection system still functions to monitor activities of the user. The difference between the particular operating mode and the normal operating mode lies in that no alarm will be raised, even if suspected fall events are detected.

It can be contemplated by those skilled in the art that this can be implemented by disabling any trigger message, for triggering an alarm, sent from the fall detection sensor to the alarm device.

Such control is easy to perform, without requiring any substantive change to the overall operation of the fall detection system.

In an alternative example of the present disclosure, the step of actuating is performed by disabling the alarm device from raising an alarm upon receiving a trigger message from the fall detection sensor.

It is also possible that a trigger message is sent as usual from the fall detection sensor to the alarm device when a suspected fall event is detected. In this case, the alarm device is controlled, for example by disabling it from raising an alarm, even when a trigger message is received.

In an example of the present disclosure, the step of controlling is performed for a first period equal to or longer than a period related to the specified activity, the step of exiting comprises exiting the particular operating mode when no activity is detected for a defined period of time following expiration of the first period.

When the particular operating mode is actuated, the fall detection sensor operates as in the normal operating mode to monitor activities of the user. If the specified or expected activities of the user is detected, the fall detection sensor is controlled to continue monitoring the user until the specified or expected activities are finished.

Thereafter, the fall detection sensor keeps monitoring the user. When no further activity is performed for a while, it can be determined that the specified activities is indeed complete and it is no longer necessary to keep running the particular operating mode. In this case, the fall detection system is operated to exit the particular operating mode.

The method thereby ensures that the particular operating mode runs for a duration that is just necessary and then gets terminated. The fall detection system thereby will not trigger any undesirable false alarm while can get back to normal operating mode as soon as the expected activities are finished.

It may also happen that the particular operating mode is actuated mistakenly by the user or other urgent engagement prevents the user from performing the specified activities supposed to take place after actuating the particular operating mode. In this case, the fall detection system, after monitoring the user for a while without detecting any specified activity, will exit the particular operating mode as well.

It is important to exit the particular operating mode as well in this case, as the user may be engaged with another task for a long while and a fall event may happen to the same or another user in the meantime. The fall detection system is thus operated to prevent any risk caused by such potential fall events.

In an example of the present disclosure, the step of exiting the particular operating mode comprises controlling the fall detection system to exit the particular operating mode.

As can be contemplated by those skilled in the art, exiting the particular operating mode may be performed automatically when no activity is detected for a defined period of time. Depending on how the particular operating mode of the fall detection system as discussed above, for example by disabling the trigger message sent to the alarm device or disabling the alarm from being raised, the particular operating mode may be exited by enabling the trigger message or the alarm once again. Some operation does not require any modification to the hardware of the fall detection system and can be conveniently realized.

In an example of the present disclosure, the step of exiting the particular operating mode comprises instructing the user to exit the particular operating mode.

Exiting the particular operating mode may also be realized by prompting or instructing the user to put the fall detection system back into the normal operating mode manually. This might be more convenient to the user as it gives the user the option of continuing to operating the fall detection system in the particular operating mode, when the user happens to have time to perform the planned activities at this moment.

In an example of the present disclosure, the specified activity is preconfigured by the fall detection system.

The specified activity, when being one of those known to be common to most users of the fall detection system, may be conveniently preconfigured into the fall detection system in advance, which may provide improved user experience.

On the other hand, in a further example of the present disclosure, the specified activity is defined and input to the fall detection system by the user.

This provides the user with more flexibility, especially when the fall detection system is equipped in a different space than designed for. For example, when the user plans to do yoga in a room equipped with the fall detection system, she or he may define the activity and input the same to the fall detection system, thereby enjoying the yoga session without worrying about triggering the alarm of the fall detection system.

In an example of the present disclosure, the fall detection sensor comprises a Time of Flight, ToF, sensor.

The method is especially advantageous for fall detection systems employing ToF sensors as a ToF sensor normally relies more on discrete position than on fall behavior to detection a fall event.

In an example of the present disclosure, the ToF sensor is integrated with a lighting device.

The operating principle of ToF sensors makes it a very convenient solution to integrate such sensors into a lighting device, which helps to make the installment and configuration of the fall detection system easier.

A second aspect of the present disclosure presents a device for operating a fall detection system according to the method according to the first aspect of the present disclosure. The fall detection system comprises at least one fall detection sensor communicatively connected to an alarm device, the at least one fall detection sensor is arranged to monitor activities of a user and to trigger the alarm device when a fall event of the user is detected, wherein the fall detection system is configured to have a particular operating mode of not triggering the alarm device when a specified activity is detected by the at last one fall detection sensor.

The device may be control device such as a remote control of the fall detection system or a device that controls the fall detection system from a remote location such as a server device of the fall detection system.

A third aspect of the present disclosure provides a fall detection system operated according to the first aspect of the present disclosure. The fall detection system comprises at least one fall detection sensor communicatively connected to an alarm device, the at least one fall detection sensor is arranged to monitor activities of a user and to trigger the alarm device when a fall event of the user is detected, wherein the fall detection system is configured to have a particular operating mode of not triggering the alarm device when a specified activity is detected by the at least one fall detection sensor.

A fourth aspect of the present disclosure provides a computer program product, comprising a computer readable storage medium storing instructions which, when executed on at least one processor, cause said at least one processor to carry out the method according to the first aspect of the present disclosure.

The above mentioned and other features and advantages of the disclosure will be best understood from the following description referring to the attached drawings. In the drawings, like reference numerals denote identical parts or parts performing an identical or comparable function or operation.

### BRIEF DESCRIPTION OF THE DRAWINGS

Figs. 1a and 1b respectively illustrate a target perceived by a ToF sensor of a fall detection system at a standing position and at a lying-down position.
Fig. 2 schematically illustrates a fall detection system in accordance with an embodiment of the present disclosure.
Fig. 3 schematically illustrates, in a flow chart type diagram, an embodiment of a method of operating the fall detection system of Fig. 2 in accordance with the present disclosure.

### DETAILED DESCRIPTION

Embodiments contemplated by the present disclosure will now be described in more detail with reference to the accompanying drawings. The disclosed subject matter should not be construed as limited to only the embodiments set forth herein. Rather, the illustrated embodiments are provided by way of example to convey the scope of the subject matter to those skilled in the art.

Throughout the description, the terms "target", "user" and "subject" are used interchangeably.

As described in the background section, a 3D ToF sensor used in a fall detection system monitors a space to capture in real time the position and posture of a person in the space. With a fallen person lying on a floor, a posture of the person as being perceived by the ToF sensor is different from when the person stands or sits.

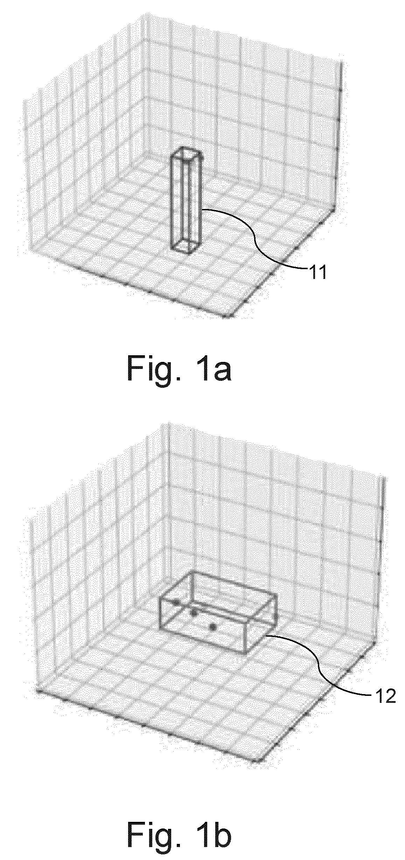

Referring to Figures 1a and 1b, which respectively illustrate a target perceived by a ToF sensor at a standing position and at a lying-down position, a column 11 as illustrated in Figure 1a represents a standing person from the view of a low-resolution, for example 8x8, 3D ToF sensor, while a column 12 as illustrated in Figure 1b is how the person is perceived by the 3D ToF sensor when the person falls and lies on the floor.

For sensors relying on discrete real-time positions, instead of relying on falling behaviors, of a target to perform fall detection, such as a low-resolution 3D ToF sensor, it might be difficult to distinguish a lying person who fell from a lying person who is repairing the toilet/drainpipe or bulky (person-alike) objects such as a pile of clothes being thrown on the floor. This may lead to false alarm from the fall detection system.

A fall detection system and a method of operating the same which can be used to prevent false alarm as discussed above without compromising accurate detection any possible fall events will be described in the following.

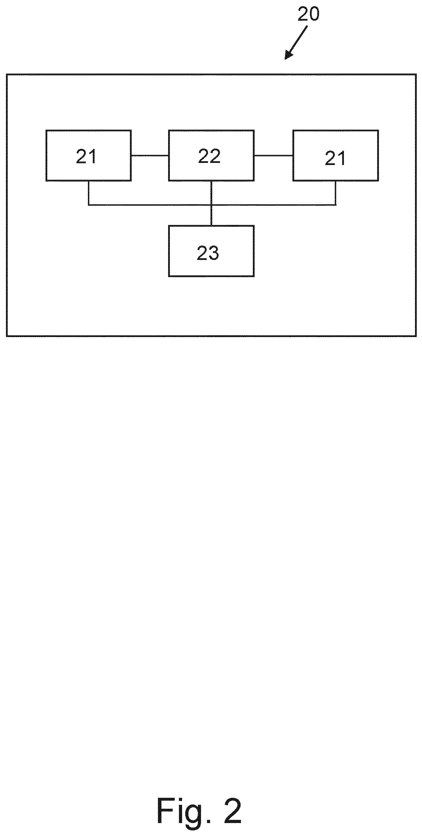

Figure 2 schematically illustrates a fall detection system 20 in accordance with an embodiment of the present disclosure. The fall detection system 20 includes one or more fall detection sensors 21 and an alarm device 22 operatively connected to each other.

The one or more fall detection sensors 21 may comprise various sensors that may be used to monitor a user or a target in terms of activities performed by the user in his or her daily life continuously, for any possible fall event.

The one or more fall detection sensors 21 may be such as visual sensors used to capture images of the target or ambient sensors used to detect the environmental changes due to falling.

The at least one fall detection sensor 21 may comprise a Time of Flight, ToF, sensor, which may be based on indoor lighting fixtures readily available at each household, such as LED lights fixed to ceilings.

The at least one fall detection sensor 21 is arranged to trigger the alarm device 22 to raise an alarm when a fall event of the user is detected.

The alarm device 22 may comprise one or more alarms arranged to raise an alarm in the form of audible sound, visible signals, phone call or messages to a relevant user.

The fall detection system 20 is deployed in for example a household, with the one or more sensors 21 disposed in different rooms of the house and connected to the alarm device 22 in a wired or wireless fashion.

As can be contemplated by those skilled in the art, the fall detection system may further comprise a processor 23, which may be for example a processor connected to each of the fall detection sensors 21 or a processor deployed remotely and configured to communicate with the fall detection sensors 21 via for example a communication network.

The processor 23 is configured to receive data acquired or captured by the one or more sensors 21 and to determine whether a fall event is happening or has happened to the user, based on the data obtained from the sensors.

The processor 23 is also configured to trigger the alarm device 22, by way of for example a trigger message transmitted to the alarm device when a fall event is detected.

As can be contemplated by those skilled in the art, the processor 23 and the sensor 21 may be a single integrated device or configured as separated components of the fall detection system 20. As an example, the sensor 21 may comprise a sensing part and further have a built-in processor that may process raw data captured by the sensing part of the sensor, to determine any possible event happening to the user.

Alternatively, the processor 23 may be a component independent of the sensor 21. In this case, the processor may be configured for other functionality as well, such as controlling electronic devices like lighting devices in the household.

The fall detection system 20 is configured to have a particular operating mode of raising no alarm when a specified activity is detected by one or more the fall detection sensor 21.

A specified activity involves positions and postures that may be confused by the fall detection sensor with positions and postures related to a fall event. Such an activity may be generally referred to as a false positive activity.

It will be understood by those skilled in the art that the phrase "a certain activity being detected by a fall detection sensor" as used herein refers to deciding that a user is performing the certain activity based on measurement data of the user as acquired by the fall detection sensor. The method of making such a decision is known to the skilled person and will not be elaborated herein.

The particular operating mode may be referred to as for example a no-fall-detection mode, under which it seems like that the fall detection function of the fall detection system is deactivated.

In practice, under the no-fall-detection mode the one or more fall detection sensor 21 still operates to monitor activities of the user, that is, the fall detection sensor 21 still captures in real time positions and postures of the user. It is just that no alarm is raised, even though a suspected fall event is determined.

The no-fall-detection mode may therefore be activated by disabling the transmission of a trigger message to the alarm device, from the fall detection sensor, or from the processor processing measurement data acquired by the fall detection sensor.

It is also possible that a trigger message for triggering an alarm is still sent to the alarm device. In this case, the no-fall-detection mode may be activated by disabling the alarm device from raising an alarm upon receiving the trigger message from the fall detection sensor.

Operations for implementing the above control is known to those skilled in the art and will not be elaborated herein.

The no-fall-detection mode may be actuated or activated via a properly designed user interface. In this case, a user or operator of the fall detection system changes the system into the no-fall-detection mode before certain activities which are known to have no risk of fall but may lead to false alarm. After completing the activities, the user or operator changes or switches the fall detection system back to a normal operating mode.

Based on the present disclosure, a mechanism to automatically exit or trigger the exit of the no-fall-detection mode is proposed. The mechanism is initiated in case the user or operator forgets to switch back to the normal operating mode or in case of any unintentional actuation of the no-fall-detection mode due to for example mis-operation.

Specific design of a user interface or mechanism for entering/exiting the no-fall-detection mode is not part of the present disclosure and will not be discussed in detail here. As an example, for a fall detection system employing a ToF sensor integrated into a lighting fixture, a switch provided on the wall may be flipped quickly for several times as a way of actuating the no-fall-detection mode. The light may dim down and up as a response, confirming that the no-fall-detection mode is activated successfully.

Another known approach is to use a mobile application or a web-based application with certain access control including for example password, role-based control. Via user manual for consumers or training for professional operators, the user or operator gets to know the activities which may lead to false alarm and changes the operation mode of the system accordingly before and after these activities.

When the fall detection system enters the no-fall-detection mode under control of the user, a fall detection sensor, such as ToF sensor, starts to monitor the space for the expected activity to take place.

If the fall detection system uses an app-based user interface, the user or operator may be asked to specify or select a false positive activity. The fall detection sensor will therefore know what will happen exactly, such as repairing the toilet or washing clothes.

For a repairing activity, the behavior of a worker is different from a normal usage of the bathroom. The repairmen may do more crouching down, stooping down, lying down and standing up during the repairing procedure. Multiple detections of relevant postures within a certain period can be used to confirm that a repairing activity is likely taking place.

For a clothes-washing activity, the fall detection sensor may increase its sampling rate, for example, from 1 frame per second to 15 frame per second and only process data from a few zones covering certain floor area. This way the sensor can capture the falling of clothes without significant increasing of the computation load, thus confirming the happening of the clothes-washing activity.

The reason for not trying to identify these activities at the normal operation mode lies in the confidence level a low-resolution ToF sensor can achieve. There must be repairing activities which are similar to normal usages of the bathroom. If the normal operation mode is used, it is likely that such a repairing activity may be mistakenly recognized as a normal usage of the bathroom with a fall, which will lead to a false alarm. There is also the possibility of mistakenly recognizing a normal usage of the bathroom with a fall as a repairing activity, then a missing alarm will happen which has more serious consequence.

After the fall detection sensor confirms that the expected activity has taken place and completed, such as now the fall detection sensor sees that the space is vacant, if the fall detection system continues to operate at the no-fall-detection mode for a defined period, for example 5 minutes, the fall detection system will remind the user/operator to change back to normal mode, e.g., via the user interface. The fall detection system may also automatically change back to the normal mode directly in case the user/operation forgot to do so.

Alternatively, after entering the no-fall-detection mode, if the fall detection sensor has not "seen" the happening of the expected activity for a defined period, the fall detection system will do the same to change back to the normal operating mode. This is because the no-fall-detection mode may have been actuated by mis-operation, it may also be due to that a different urgent engagement prevents the user from performing the specified activities supposed to take place after actuating the particular operating mode.

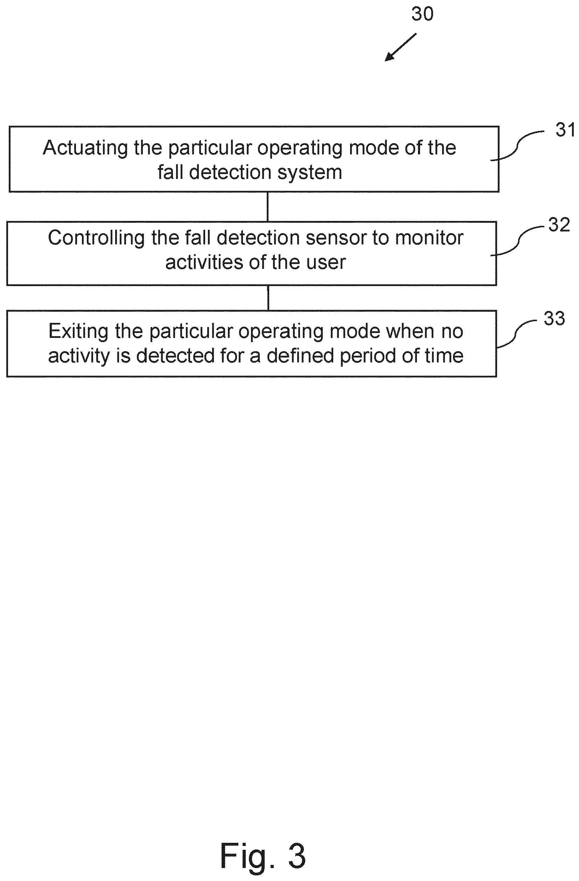

The above procedure of operating the fall detection system of the present disclosure will be summarized in the following with reference to Figure 3, which illustrates, in a flow chart type diagram, an embodiment of a method of operating the fall detection system in accordance with the present disclosure.

At step 31, the particular operating mode, or the no-fall-detection mode of the fall detection system is actuated.

As described above, this may be implemented by transmitting an instruction from the user or operator to the fall detection system, via for example a user interface or a control mechanism such as a switch.

Under the particular operating mode, no alarm will be raised when a specified activity is detected by a fall detection sensor of the fall detection system.

From the control point of view, this may be implemented by disabling a trigger message sent to the alarm device in response to detecting the specified activity, which is similar to a fall activity, by the fall detection sensor.

Alternatively, the actuation of the particular operating mode of the fall detection system is realized by disabling the alarm device from raising an alarm.

At step 32, the fall detection sensor is controlled to monitor activities of the user.

In practice, the fall detection sensor does not change its normal operation, it keeps on capturing positions and postures of any object within its monitoring range.

At step 33, when no activity is detected for a defined period of time, the particular operating mode of the fall detection system is exited.

As discussed above, exiting of the particular operating mode of the fall detection system may be performed automatically, when it is determined from data captured by the fall detection sensor that no activity has been performed for a defined period of time. Alternatively, the fall detection system may remind the user or operator to exit the fall detection system out of the particular operating mode, by way of for example a reminding alert different than a fall alarm.

In real-life applications, a length of the defined period is variable depending on different states monitored by the fall detection sensor.

As an alternative not part of the claimed invention, after the particular operating mode is actuated, when the expected or specified activity from the user is detected and determined to have been finished, if the fall detection system continues in the particular operating mode, it may determine that it is no longer necessary for the detection system to operate in this no-fall-detection mode and therefore it is time to exit the particular operating mode.

In this case, the fall detection sensor monitors activities of the user for a period at least equal to a period where the specified activities last. The monitoring of the user by the fall detection sensor normally is longer that the period of the specified activities.

In another example where the fall detection sensor detects no activity at all after entering the particular operating mode, the exiting the fall detection system out of the particular operating mode is performed much sooner. Therefore the monitoring operation of the fall detection sensor in the particular operating mode is much shorter.

In the following, a mechanism for enabling the user or operator of a fall detection system to add new local-relevant false positive activities into the no-fall-detection mode will be described.

In practice, it is difficult for a fall detection system to predict all false positive activities before deployment. If a user or operator encounters a false positive which is caused by a certain activity which is actually safe and involves no risk of falling, he or she can choose to add it into the no-fall-detection mode.

This can be realized via an app-based user interface. To do so, first of all the user or operator needs to identify the exact activity leading to the false positive and repeat it. The fall detection system then guides the user or operator via the user interface to perform the activity and collects the sensor data for post processing. The user or operator may repeat the activity for several times and the fall detection sensor may increase the sampling rate over the procedure.

The fall detection system may also ask the user or operator to describe the activity in text via the user interface. The system provider may also connect with the user or operator (e.g., via a phone call) to get more details.

With the collected sensor data and description of the activity, a service engineer of the fall detection system can decide to add the activity into the no-fall-detection mode or not. The service engineer may choose to add the activity just for the exact sensor which reported the false positive, or for all sensors if the activity is common for all users.

The present disclosure is not limited to the examples as disclosed above, and can be modified and enhanced by those skilled in the art beyond the scope of the present disclosure as disclosed in the appended claims without having to apply inventive skills and for use in any data communication, data exchange and data processing environment, system or network.

## Claims

1. A method (30) of operating a fall detection system (20), the system (20) comprising at least one fall detection sensor (21) communicatively connected to an alarm device (22), the at least one fall detection sensor (21) arranged to monitor activities of a user and to trigger the alarm device (22) to raise an alarm when a fall event of the user is detected, wherein the fall detection system (20) is configured to have a particular operating mode of raising no alarm when a specified activity is detected by the at least one fall detection sensor (21), the specified activity comprising positions and postures that may be confused by the fall detection sensor with positions and postures related to a fall event, the method (30) comprising the steps of:
- actuating (31) the particular operating mode of the fall detection system (20);
- controlling (32) the fall detection sensor to monitor activities of the user;
- exiting (33) the particular operating mode of the fall detection system when no activity is detected by the fall detection sensor for a defined period of time, a length of the defined period depending on the specified activity monitored by the fall detection sensor; wherein
the step of controlling (32) is performed for a period of time,
the step of exiting (33) comprises exiting the particular operating mode when no activity is detected during the period of time.

2. The method (30) according to claim 1, wherein the step of actuating (31) is performed in response to receiving an instruction from the user.

3. The method (30) according to claim 1 or 2, wherein the step of actuating (31) is performed by disabling a trigger message sent by the fall detection sensor (21) to the alarm device (22).

4. The method (30) according to claim 1 or 2, wherein the step of actuating (31) is performed by disabling the alarm device (22) from raising an alarm upon receiving a trigger message from the fall detection sensor (21).

5. The method (30) according to any of the previous claims, wherein the step of controlling (32) is performed for a first period equal to or longer than a period related to the specified activity,
the step of exiting (33) comprises exiting the particular operating mode when no activity is detected for a defined period of time following expiration of the first period.

6. The method (30) according to any of the previous claims, wherein exiting (33) the particular operating mode comprises controlling the fall detection system to exit the particular operating mode.

7. The method (30) according to any of the previous claims 1 to 5, wherein exiting (33) the particular operating mode comprises instructing the user to exit the particular operating mode.

8. The method (30) according to any of the previous claims, wherein the specified activity is preconfigured by the fall detection system (20).

9. The method (30) according to any of the previous claims 1 to 7, wherein the specified activity is defined and input to the fall detection system (20) by the user.

10. A device for operating a fall detection system (20) according to the method (30) of any of the previous claims 1 to 9, the system (20) comprising at least one fall detection sensor (21) communicatively connected to an alarm device (22), the at least one fall detection sensor (21) arranged to monitor activities of a user and to trigger the alarm device (22) when a fall event of the user is detected, wherein the fall detection system (20) is configured to have a particular operating mode of raising no alarm when a specified activity is detected by the at least one fall detection sensor (21).

11. The device according to claim 10, wherein the fall detection sensor (21) comprises a Time of Flight, ToF, sensor.

12. The device according to claim 11, wherein the ToF sensor (21) is integrated with a lighting device.

13. A fall detection system (20) operated according to the method (30) of any of the previous claims 1 to 9, the system (20) comprising at least one fall detection sensor (21) communicatively connected to an alarm device (22), the at least one fall detection sensor (21) arranged to monitor activities of a user and to trigger the alarm device (22) to raise an alarm when a fall event of the user is detected, wherein the fall detection system (20) is configured to have a particular operating mode of raising no alarm when a specified activity is detected by the at least one fall detection sensor (21).

14. A computer program product, comprising a computer readable storage medium storing instructions which, when executed on at least one processor, cause said at least one processor to carry out the method according to any of the previous claims 1 to 9.

## Patentansprüche

1. Verfahren (30) zum Betreiben eines Sturzerkennungssystems (20), das System (20) umfassend mindestens einen Sturzerkennungssensor (21), der mit einer Alarmvorrichtung (22) kommunikativ verbunden ist, wobei der mindestens eine Sturzerkennungssensor (21) angeordnet ist, um Aktivitäten eines Benutzers zu überwachen und die Alarmvorrichtung (22) auszulösen, um einen Alarm auszugeben, wenn ein Sturzereignis des Benutzers erkannt wird, wobei das Sturzerkennungssystem (20) konfiguriert ist, um einen bestimmten Betriebsmodus, bei dem kein Alarm ausgegeben wird, aufzuweisen, wenn eine spezifizierte Aktivität durch den mindestens einen Sturzerkennungssensor (21) erkannt wird, die spezifizierte Aktivität umfassend Positionen und Haltungen, die durch den Sturzerkennungssensor mit Positionen und Haltungen in Zusammenhang mit einem Sturzereignis verwechselt werden können, das Verfahren (30) umfassend die Schritte:
- Betätigen (31) des bestimmten Betriebsmodus des Sturzerkennungssystems (20);
- Steuern (32) des Sturzerkennungssensors, um Aktivitäten des Benutzers zu überwachen;
- Verlassen (33) des bestimmten Betriebsmodus des Sturzerkennungssystems, wenn für eine definierte Zeitdauer keine Aktivität durch den Sturzerkennungssensor erkannt wird, wobei eine Länge der definierten Dauer von der spezifizierten Aktivität, die durch den Sturzerkennungssensor überwacht wird, abhängt; wobei
der Schritt des Steuerns (32) für eine Zeitdauer durchgeführt wird,
der Schritt des Verlassens (33) das Verlassen des bestimmten Betriebsmodus, wenn während der Zeitdauer keine Aktivität erkannt wird, umfasst.

2. Verfahren (30) nach Anspruch 1, wobei der Schritt des Betätigens (31) als Reaktion auf ein Empfangen einer Anweisung von dem Benutzer durchgeführt wird.

3. Verfahren (30) nach Anspruch 1 oder 2, wobei der Schritt des Betätigens (31) durch Deaktivieren einer Auslösenachricht, durch den Sturzerkennungssensor (21) an die Alarmvorrichtung (22) gesendet wird, durchgeführt wird.

4. Verfahren (30) nach Anspruch 1 oder 2, wobei der Schritt des Betätigens (31) durch Deaktivieren der Alarmvorrichtung (22) gegen das Auslösen eines Alarms bei dem Empfangen einer Auslösenachricht von dem Sturzerkennungssensor (21) durchgeführt wird.

5. Verfahren (30) nach einem der vorstehenden Ansprüche, wobei der Schritt des Steuerns (32) für eine erste Dauer, die gleich oder länger als eine Dauer in Zusammenhang mit der spezifizierten Aktivität ist, durchgeführt wird,
wobei der Schritt des Verlassens (33) das Verlassen des bestimmten Betriebsmodus, wenn für eine definierte Zeitdauer nach Ablauf der ersten Dauer keine Aktivität erkannt wird, umfasst.

6. Verfahren (30) nach einem der vorstehenden Ansprüche, wobei das Verlassen (33) des bestimmten Betriebsmodus das Steuern des Sturzerkennungssystems umfasst, um den bestimmten Betriebsmodus zu verlassen.

7. Verfahren (30) nach einem der vorstehenden Ansprüche 1 bis 5, wobei das Verlassen (33) des bestimmten Betriebsmodus ein Anweisen des Benutzers umfasst, den bestimmten Betriebsmodus zu verlassen.

8. Verfahren (30) nach einem der vorstehenden Ansprüche, wobei die spezifizierte Aktivität durch das Sturzerkennungssystem (20) vorkonfiguriert wird.

9. Verfahren (30) nach einem der vorstehenden Ansprüche 1 bis 7, wobei die spezifizierte Aktivität durch den Benutzer definiert und in das Sturzerkennungssystem (20) eingegeben wird.

10. Vorrichtung zum Betreiben eines Sturzerkennungssystems (20) gemäß dem Verfahren (30) nach einem der vorstehenden Ansprüche 1 bis 9, das System (20) umfassend mindestens einen Sturzerkennungssensor (21), der mit einer Alarmvorrichtung (22) kommunikativ verbunden ist, wobei der mindestens eine Sturzerkennungssensor (21) angeordnet ist, um Aktivitäten eines Benutzers zu überwachen und die Alarmvorrichtung (22) auszulösen, wenn ein Sturzereignis des Benutzers erkannt wird, wobei das Sturzerkennungssystem (20) konfiguriert ist, um einen bestimmten Betriebsmodus, bei dem kein Alarm ausgegeben wird, aufzuweisen, wenn eine spezifizierte Aktivität durch den mindestens einen Sturzerkennungssensor (21) erkannt wird.

11. Vorrichtung nach Anspruch 10, wobei der Sturzerkennungssensor (21) einen Laufzeitsensor, ToF-Sensor, umfasst.

12. Vorrichtung nach Anspruch 11, wobei der ToF-Sensor (21) mit einer Beleuchtungsvorrichtung integriert ist.

13. Sturzerkennungssystem (20), das gemäß dem Verfahren (30) nach einem der vorstehenden Ansprüche 1 bis 9 betrieben wird, das System (20) umfassend mindestens einen Sturzerkennungssensor (21), der mit einer Alarmvorrichtung (22) kommunikativ verbunden ist, wobei der mindestens eine Sturzerkennungssensor (21) angeordnet ist, um Aktivitäten eines Benutzers zu überwachen und die Alarmvorrichtung (22) auszulösen, um einen Alarm auszugeben, wenn ein Sturzereignis des Benutzers erkannt wird, wobei das Sturzerkennungssystem (20) konfiguriert ist, um einen bestimmten Betriebsmodus, bei dem kein Alarm ausgegeben wird, aufzuweisen, wenn eine spezifizierte Aktivität durch den mindestens einen Sturzerkennungssensor (21) erkannt wird.

14. Computerprogrammprodukt, umfassend ein computerlesbares Speichermedium, das Anweisungen speichert, die, wenn sie auf mindestens einem Prozessor ausgeführt werden, den mindestens einen Prozessor veranlassen, das Verfahren nach einem der vorstehenden Ansprüche 1 bis 9 umzusetzen.

## Revendications

1. Procédé (30) permettant de faire fonctionner un système de détection de chute (20), le système (20) comprenant au moins un capteur de détection de chute (21) connecté en communication à un dispositif d'alarme (22), l'au moins un capteur de détection de chute (21) étant agencé pour surveiller des activités d'un utilisateur et pour déclencher le dispositif d'alarme (22) afin d'émettre une alarme lorsqu'un événement de chute de l'utilisateur est détecté, dans lequel le système de détection de chute (20) est configuré pour avoir un mode de fonctionnement particulier consistant à n'émettre aucune alarme lorsqu'une activité spécifiée est détectée par l'au moins un capteur de détection de chute (21), l'activité spécifiée comprenant des positions et des postures qui peuvent être confondues par le capteur de détection de chute avec des positions et des postures liées à un événement de chute, le procédé (30) comprenant les étapes consistant à :
- actionner (31) le mode de fonctionnement particulier du système de détection de chute (20) ;
- commander (32) le capteur de détection de chute pour surveiller des activités de l'utilisateur ;
- sortir (33) du mode de fonctionnement particulier du système de détection de chute lorsqu'aucune activité n'est détectée par le capteur de détection de chute pendant une période de temps définie, une durée de la période définie dépendant de l'activité spécifiée surveillée par le capteur de détection de chute ; dans lequel
l'étape de commande (32) est effectuée pendant une période de temps,
l'étape de sortie (33) comprend la sortie du mode de fonctionnement particulier lorsqu'aucune activité n'est détectée pendant la période de temps.

2. Procédé (30) selon la revendication 1, dans lequel l'étape d'actionnement (31) est effectuée en réponse à la réception d'une instruction de l'utilisateur.

3. Procédé (30) selon la revendication 1 ou 2, dans lequel l'étape d'actionnement (31) est effectuée en désactivant un message de déclenchement envoyé par le capteur de détection de chute (21) au dispositif d'alarme (22).

4. Procédé (30) selon la revendication 1 ou 2, dans lequel l'étape d'actionnement (31) est effectuée en empêchant le dispositif d'alarme (22) de déclencher une alarme lors de la réception d'un message de déclenchement provenant du capteur de détection de chute (21).

5. Procédé (30) selon l'une quelconque des revendications précédentes, dans lequel l'étape de commande (32) est effectuée pendant une première période égale ou supérieure à une période liée à l'activité spécifiée,
l'étape de sortie (33) comprend la sortie du mode de fonctionnement particulier lorsqu'aucune activité n'est détectée pendant une période de temps définie après l'expiration de la première période.

6. Procédé (30) selon l'une quelconque des revendications précédentes, dans lequel la sortie (33) du mode de fonctionnement particulier comprend la commande du système de détection de chute pour sortir du mode de fonctionnement particulier.

7. Procédé (30) selon l'une quelconque des revendications 1 à 5 précédentes, dans lequel la sortie (33) du mode de fonctionnement particulier comprend le fait d'ordonner à l'utilisateur de sortir du mode de fonctionnement particulier.

8. Procédé (30) selon l'une quelconque des revendications précédentes, dans lequel l'activité spécifiée est préconfigurée par le système de détection de chute (20).

9. Procédé (30) selon l'une quelconque des revendications 1 à 7 précédentes, dans lequel l'activité spécifiée est définie et entrée dans le système de détection de chute (20) par l'utilisateur.

10. Dispositif permettant de faire fonctionner un système de détection de chute (20) selon le procédé (30) selon l'une quelconque des revendications 1 à 9 précédentes, le système (20) comprenant au moins un capteur de détection de chute (21) connecté en communication à un dispositif d'alarme (22), l'au moins un capteur de détection de chute (21) étant agencé pour surveiller des activités d'un utilisateur et pour déclencher le dispositif d'alarme (22) lorsqu'un événement de chute de l'utilisateur est détecté, dans lequel le système de détection de chute (20) est configuré pour avoir un mode de fonctionnement particulier consistant à n'émettre aucune alarme lorsqu'une activité spécifiée est détectée par l'au moins un capteur de détection de chute (21).

11. Dispositif selon la revendication 10, dans lequel le capteur de détection de chute (21) comprend un capteur à temps de vol, ToF.

12. Dispositif selon la revendication 11, dans lequel le capteur ToF (21) est intégré à un dispositif d'éclairage.

13. Système de détection de chute (20) fonctionnant selon le procédé (30) selon l'une quelconque des revendications 1 à 9 précédentes, le système (20) comprenant au moins un capteur de détection de chute (21) connecté en communication à un dispositif d'alarme (22), l'au moins un capteur de détection de chute (21) étant agencé pour surveiller des activités d'un utilisateur et pour déclencher le dispositif d'alarme (22) pour émettre une alarme lorsqu'un événement de chute de l'utilisateur est détecté, dans lequel le système de détection de chute (20) est configuré pour avoir un mode de fonctionnement particulier consistant à n'émettre aucune alarme lorsqu'une activité spécifiée est détectée par l'au moins un capteur de détection de chute (21).

14. Produit-programme d'ordinateur, comprenant un support de stockage lisible par ordinateur stockant des instructions qui, lorsqu'elles sont exécutées sur au moins un processeur, amènent ledit au moins un processeur à réaliser le procédé selon l'une quelconque des revendications 1 à 9 précédentes.
